# EUROPEAN PATENT APPLICATION

(11) **EP 4 376 348 A1**
(43) Date of publication of application: **29.05.2024**
(21) Application number: 22209893.1
(22) Date of filing: 28.11.2022
(51) Int. Cl.: H04L 9/00, H04L 9/32

(54) **COMPUTER-IMPLEMENTED METHOD AND COMPUTER PROGRAM PRODUCT FOR VERIFYING AN ORIGIN OF A CRYPTOGRAPHIC TOKEN AND DISTRIBUTED DATABASE SYSTEM**

(71) Applicant: Siemens Aktiengesellschaft, 80333 München (DE)
(72) Inventor: Falk, Rainer, 85586 Poing (DE)
(74) Representative: Siemens Patent Attorneys

(57) **Abstract**

A computer-implemented method for verifying an origin of a cryptographic token is proposed. The method comprising:
a) receiving a cryptographic token including a first token attribute, wherein said cryptographic token being associated with an authenticable first entity,
b) receiving cryptographically secured verifying information, wherein said cryptographically secured verifying information being allocated to the authenticable first entity and including a second token attribute,
c) determining whether the cryptographically secured verifying information is actually published by the authenticable first entity by examining authentication information for obtaining an authentication result, and
d) if the authentication result is positive, verifying whether the cryptographic token is actually issued by the authenticable first entity by comparing the first token attribute and the second token attribute for obtaining a verification result for the cryptographic token.

## Description

*Independent of the grammatical term usage, individuals with male, female or other gender identities are included within the term.*

The present invention relates to a computer-implemented method and computer program product for verifying an origin of a cryptographic token. Further, the present invention relates to a distributed database system for verification of an origin of a cryptographic token.

Cryptographic tokens, such as non-fungible tokens (NFTs), are managed in a decentrally distributed, cryptographically secured transaction database such as distributed ledger (e.g. Blockchain or Ethereum). A NFT is a unique, non-copyable identifier which can represent a virtual, digital object or a real, physical object. In particular, NFTs are used as proof of ownership and/or as a right to use real or virtual objects such as sports shoes. For this purpose, a NFT allocated to a real object (sport shoes) is formed by the manufacturer of the real object and is transferred to a respective user of the distributed ledger which wants to purchase the sport shoes.

When issuing (or also minting) the NFTs on the distributed ledger, it must be ensured that a NFT is actually issued by the original manufacturer of the allocated real object. But such a distributed ledger can be used by arbitrary users. Thus, arbitrary users can also generate and issue NFTs that are cryptographically confirmed as correct by the distributed ledger.

Furthermore, a NFT can also represent real, monetary value. Therefore, there is a risk that NFTs will be counterfeited. This is the case if, similar to counterfeited money, they are generated by an entity not authorized to do so. In the past, NFTs have already been issued and traded in an inadmissible manner, e.g. for sports shoes of a specific company. Inadmissible means that they were issued without the consent of the specific company. But these NFTs are valid NFTs from the perspective of the distributed ledger.

Moreover, according to standard ERC-721 (Ethereum Request for Comments-721), a token can generally be identified as a tuple of token type (contract-ID) and the token instance identifier (token-ID).

A further example of a NFT are membership credentials for a virtual yacht club (see reference [1]), in which it is known that the web page of the virtual yacht club provides information about the contract-ID of the virtual yacht club. However, this information is made available administratively and can be manually verified by human users. Furthermore, in some cases it is not immediately clear whether two NFTs with different contract-IDs were issued by the same entity considered trustworthy. Moreover, it is known that a trading platform like "OpenSea" checks some issuers of NFTs (see reference [2]). These are manual checks that result in that the issuer of the respective NFT being marked with a blue tick "Verified Collection".

In addition, it is also known that a distributed ledger can be used to register identifiers. This can also be referred to as blockchain naming system, for example the Ethereum Name Service (ENS) (see reference [3]). ENS allows to register names that are stored in the DNS (Domain Name System) in addition to freely selectable names. To prevent unauthenticated registration of a DNS name in the ENS, i.e., by someone other than the owner of the corresponding DNS record, it is known to deposit a check value in the DNS.

Thus, it is one object of the present invention to improve the providing of cryptographic tokens.

According to a first aspect, a computer-implemented method for verifying an origin of a cryptographic token of a distributed database is proposed. The method comprising:
a) receiving a cryptographic token including a first token attribute, wherein said cryptographic token being associated with an authenticable first entity,
b) receiving cryptographically secured verifying information, wherein said cryptographically secured verifying information being allocated to the authenticable first entity and including a second token attribute,
c) determining whether the cryptographically secured verifying information is actually published by the authenticable first entity by examining authentication information allocated to the authenticable first entity for obtaining an authentication result, and
d) if the authentication result is positive, verifying whether the cryptographic token is actually issued by the authenticable first entity by comparing at least the first token attribute of the cryptographic token and the second token attribute of the cryptographically secured verifying information for obtaining a verification result for the cryptographic token.

Using the present computer-implemented method, the providing of cryptographic tokens is improved due to an automatically performed verification of an origin of a cryptographic token.

With the above-described computer-implemented method, it is possible to automatically perform a verification of an origin of a cryptographic token, for example a non-fungible token (NFT) or a fungible token, in order to determine whether the cryptographic token is an original cryptographic token actually issued by an issuer, here the authenticable first entity, or a counterfeited cryptographic token actually not issued by the authenticable first entity. Thus, it can be automatically distinguished for each cryptographic token of the distributed database whether it is an original or a counterfeited cryptographic token. Thus, it can be verified whether a publisher of a cryptographic token who claims to be the issuer of the cryptographic token is actually the real issuer of this cryptographic token.

For this purpose, the computer-implemented method according to the first aspect includes two stages, in particular a determining state and a verifying stage. In the determining stage, an authenticable issuer (the authenticable first entity) of a cryptographic token, e.g. a company or a human being, publishes cryptographically secured verifying information which includes a second attribute. By means of the authentication information, it can then be determined whether said cryptographically secured verifying information is actually published by the authenticable first entity (see method steps a), b) and c) above). In the verifying stage, if the cryptographically secured verifying information is actually published by the authenticable first entity, it is then verified by the comparing according to method step d) whether the issued cryptographic token is actually issued by the authenticable first entity, i.e. whether the cryptographic token was issued by the authenticable first entity or whether the issuing is authorized by the authenticable first entity.

Consequently, the above-described computer-implemented method has the technical effect that it is possible, for example, for a database participant of the distributed database, to automatically detect and prevent or at least restrict the transfer or trade of counterfeited or illegally issued cryptographic tokens. Advantageously, this improves the security and the reliability while providing (transferring or trading) cryptographic tokens in the distributed database.

It is further advantageous that the above-described computer-implemented method offers the possibility that the issuer, such as the authenticable first entity, can centrally publish at one place, such as a website of the authenticable first entity, which cryptographic tokens are original cryptographic tokens actually issued by this issuer.

A computer-implemented method is a method which involves the use of a computer, a computer network or other programmable apparatus, where one or more features are realized wholly or partly by means of a computer program.

In particular, the term "origin" is understood to mean that the cryptographic token has a specific origin, for example, was generated and issued by the authenticable first entity. Specifically, in other words, the origin of a cryptographic token provides information about that entity by which the cryptographic token was originally and actually generated and issued.

Preferably, the term "authenticable" means that the first entity can be identified and authenticated by examining the authentication information allocated to the authenticable first entity within the distributed database and/or within a Public Key Infrastructure (PKI). Thus, the authenticable first entity fulfills the protection goal of authenticity of the protection goals of information security. Therefore, it is ensured that it can be traceable ensured that a communication partner, for example the authenticable first entity, is actually who he claims to be.

Specifically, the authenticable first entity is a database participant (e.g. a user) of the distributed database. It can be embodied as an end terminal associated with the database participant. Further, the respective entity, e.g. the authenticable first entity, may be implemented in hardware and/or in software. If said entity is implemented in hardware, it may be embodied as a device, e.g. as a computer or as a part of a system, e.g. a computer system. If said entity is implemented in software it may be embodied as a computer program product, as a function, as a routine, as a program code or as an executable object.

In particular, the receiving according to step a) is performed independent from the receiving according to step b). Thus, the cryptographic token is received independent from the cryptographically secured verifying information.

For example, the cryptographically secured verifying information can be designated as issuer-authenticated token attribute information since it specifies by which at least one attribute those cryptographic tokens are characterized which are actually authenticated and issued by the issuer. Thus, the cryptographically secured verifying information includes information characterizing the cryptographic tokens that actually originate from the respective issuer, i.e. that, from the issuer's point of view, justifiably establish a reference to this issuer or to a manufacturer information used by him.

Further, the term "actually published by" means that the cryptographically secured verifying information has actually been generated and published by the authenticable first entity, i.e. the authenticable first entity is the real or actual issuer or publisher of the cryptographically secured verifying information.

Moreover, the term "actually issued by" means that the cryptographic token has actually been generated and issued by the authenticable first entity, i.e. the authenticable first entity is the real or actual issuer of the cryptographic token.

Specifically, prior to the receiving according to steps a) and b), the method comprises the steps:
generating a cryptographic token and issuing the cryptographic token to the distributed database, and
generating cryptographically secured verifying information and publishing the cryptographically secured verifying information to the distributed database.

In particular, if the authentication result and the verification result are positive, the received cryptographic token as well as the received cryptographically secured verifying information are actually generated, issued and provided by the authenticable first entity. In this case, the authenticable first entity is the actual issuer of the cryptographic token and the actual publisher of the cryptographically secured verifying information.

For example, it is possible that the cryptographic token and the cryptographically secured verifying information are issued and provided in response to a request, for example, by a second entity of the distributed database, for performing a transaction with the cryptographic token transmitted to the distributed database.

Specifically, the first token attribute of the cryptographic token has in hexadecimal notation a hash value of 0xd07dc426. Further, the second token attribute included in the cryptographically secured verifying information indicates that the cryptographic token has in hexadecimal notation a hash value of 0xd07dc426. Thus, by comparing the first token attribute (hash value of 0xd07dc426) and the second token attribute (hash value of 0xd07dc426), the verification result is positive since the first token attribute corresponds to the second token attribute. For example, if the first token attribute has a hash value of 0xd456782d and thus does not match (is different to) the second token attribute, this is an indication that the cryptographic token is counterfeited since it should actually match the second token attribute of the cryptographically secured verifying information. In the lastmentioned case, either the cryptographic token or the cryptographically secured verifying information is counterfeited.

According to an embodiment, the verification result is positive if the comparing results in that the first token attribute corresponds to the second token attribute, wherein the verification result is negative if the comparing results in that the first token attribute is different to the second token attribute.

According to a further embodiment, the received cryptographic token is an original cryptographic token actually issued by the authenticable first entity if the verification result is positive and the received cryptographic token is a counterfeited cryptographic token if the verification result is negative.

Preferably, a counterfeited cryptographic token is a cryptographic token which is actually not issued by the authenticable first entity and thus is designated as counterfeited, falsified or faked.

According to a further embodiment, the method includes a step e) which includes:
e1) performing a first action if the verification result is negative, wherein the first action includes displaying a warning message indicating that the received cryptographic token is counterfeited, blocking of an access to the counterfeited cryptographic token, blocking of an access to a crypto wallet function and/or blocking a token transaction, and/or
e2) performing a second action if the verification result is positive, wherein the second action includes displaying of information indicating that the received cryptographic token is actually issued by the authenticable first entity and/or allowing a token transaction request referencing the cryptographic token.

In particular, the warning message or a further warning message is displayed on a screen of that entity which has requested a transaction with the cryptographic token and thus has triggered the determining and verifying according to method steps c) and d), for example, the second entity or a marketplace of the distributed database.

For example, at least one database participant of the distributed database has a crypto wallet by which he can perform different crypto wallet functions such as a transaction with respect to the cryptographic token.

According to a further embodiment, the method includes:
f) displaying a further warning message, if a further cryptographic token issued by another entity different to the authenticable first entity, includes a reference to the authenticable first entity, wherein the reference includes an identifier specific for the authenticable first entity and/or a further identifier which is similar to the identifier and with which a likelihood of confusion arises between the identifier and the further identifier.

The further cryptographic token can be formed as a non-fungible token or as a fungible token.

Another entity can be a further authenticable first entity of the distributed database. Another entity can also be any other entity which is a database participant of the distributed database and which issues further cryptographic tokens.

A reference to the authenticable first entity can appear if the further cryptographic token (unauthenticated) establishes a reference, e.g. by an attribute or referenced attribute contained therein, to the authenticable first entity, although the further cryptographic token was not issued by the authenticable first entity but by the further authenticable first entity.

If the authenticable first entity is a manufacturer, the identifier includes a manufacturer identifier or a trademark which is owned and used by the authenticable first entity.

In particular, the further identifier is similar to the corresponding identifier. For example, the identifier is a company name "ATTENTION", then the further identifier can be a company name "ATENTION". Thus, the company names "ATTENTION" and "ATENTION" are similar so that a likelihood of confusion arises between them. Thus, if the authenticable first entity has the company name "ATTENTION" and the further cryptographic token, which is not issued by the authenticable first entity, uses the company name "ATENTION" in its further cryptographic token, the further warning message can be displayed due to the similarity of the company names "ATTENTION" and "ATENTION".

According to a further embodiment, at least the cryptographic token received in step a) is formed as a non-fungible cryptographic token.

According to a further embodiment, the first token attribute includes a contract identifier being unique for the authenticable first entity and/or a token identifier of the cryptographic token.

The advantage of a non-fungible cryptographic token is that it is unique and stands alone, so it cannot be duplicated or split. It can only be shared or destroyed as an entire unit.

A cryptographic token can be a fungible token or a non-fungible token that is or can be deposited in a cryptographic distributed transaction database such as a distributed ledger.

Fungibility of a cryptographic token is the property that it is determinable according to a unit of measure and thus exchangeable for other pieces of the same kind. A fungible cryptographic token represents a measure (e.g., a monetary value or count value) that can be divided. Such a fungible cryptographic token can therefore be split, and a partial value of the measure can be shared or destroyed.

Preferably, the contract identifier being unique for the authenticable first entity can be referred to as unique contract-ID of the authenticable first entity.

A first token attribute of a cryptographic token, such as an NFT, can be formed as a tuple of contract identifier (contract-ID) and/or a token identifier (token-ID). The contract-ID can also be designated as smart contract address and the token-ID can also be designated as token instance identifier. Preferably, a smart contract or a smart contract address is a unique address allocated when a smart contract is deployed. A smart contract can be implemented as a software such as a computer program. In particular, a generated cryptographic token can also be a smart contract. For example, a smart contract determines how a transfer of a cryptographic token takes place. Preferably, the contract-ID refers to the address where the smart contract is deployed on the distributed database, wherein the token-ID refers to a specific ID of the NFT itself. As mentioned above, the contract-ID is unique for the authenticable first entity such as a specific company. In particular, consequently, each cryptographic token the specific company actually issues, has a contract-ID which corresponds to the contract-ID of the specific company but has a different token-ID. The contract-ID can be represented as a hexadecimal notation, for example
0xd07dc4262BCDbf85190C01c996b4C06a461-d2430. The token-ID can be represented as a numerical value such as 140082. Preferably, the cryptographic token and the further cryptographic token are allocated to the ERC-721-standard (Ethereum Request for Comments 721).

According to a further embodiment, the authentication information includes a digital certificate allocated to the authenticable first entity and issued by a certificate authority, a registry number of the authenticable first entity, in particular a company registration number, a domain name system of the authenticable first entity and/or a legal entity certificate of the authenticable first entity, wherein by applying a digital signature of the authenticable first entity, in particular a private key, to the verifying information, the verifying information is cryptographically secured.

Preferably, step c) of the above-described computer-implemented method according to the first aspect includes further, prior to the determining in step c):
determining whether the authenticable first entity is actually the authenticable first entity by examining the authentication information, in particular by using the digital certificate issued by the certificate authority allocated to the authenticable first entity, for obtaining a further authentication result.

In particular, if the further authentication result is positive, the authenticity of the authenticable first entity is confirmed, wherein if the further authentication result is negative, the authenticity of the authenticable first entity is not confirmed.

In particular, the authentication result obtained in step c) of the above-described computer-implemented method according to the first aspect is positive if the examining of the authentication information results in that the first entity is the actual publisher of the cryptographically secured verifying information, wherein the authentication result is negative if the examining of the authentication information results in that the first entity is not the actual publisher of the cryptographically secured verifying information. Preferably, if the authentication result is negative, the verifying according to step d) is blocked and denied and a warning message is then displayed and/or access to the cryptographically secured verifying information is denied.

An identification of the issuer of the cryptographic token, for example the authenticable first entity, can be performed by using authentication means such as the company registration number, the domain name system of the authenticable first entity and/or a legal entity certificate of the authenticable first entity.

Preferably, the authentication information according to step c) is formed as asymmetrical cryptography or public-key cryptography including a key pair including a public key and a private key both allocated to the authenticable first entity. Preferably, the authentication information according to step c) is formed as asymmetrical cryptography or public key cryptography including a key pair including a public key and a private key both associated with the authenticable first entity, wherein a digital certificate comprising the public key of the authenticable first entity is allocated to the authenticable first entity by a public key infrastructure or a certificate authority.

The examining according to step c) for obtaining the authentication result can be performed as follows: in a first step, the authenticable first entity applies its private key to the verifying information for cryptographically securing the verifying information for obtaining the cryptographically secured verifying information. Thus, the cryptographically secured verifying information is encrypted (digitally signed) by the private key of the authenticable first entity. In a second step after the first step, based on the public key which is part of the key pair allocated to the authenticable first entity and a public directory of a certification service provider, a receiver unit or any other entity, such as the second entity or a marketplace, can examine, in dependence on the identity of the authenticable first entity checked by the public key and the public directory, whether the cryptographically secured verifying information is actually published by the authenticable first entity.

This has the advantage that a database participant can verify whether the cryptographically secured verifying information has actually been generated and published by the authenticable first entity on the basis of the authentication information allocated to the authenticable first entity.

A certificate authority (CA) is a trusted entity that issues digital certificates. The digital certificates are used to certify the electronic identity of communication partners such as the authenticable first entity. Specifically, the certification service provider is an embodiment of the CA.

Preferably, the cryptographically secured verifying information includes on the one hand the authentication information, in particular the digital certificate issued by the certificate authority allocated to the authenticable first entity, and on the other hand the second token attribute, for example, in the case of the authenticable first entity, at least the contract-ID of the authenticable first entity.

According to a further embodiment, step b) includes, prior to the receiving, the step:
publishing the cryptographically secured verifying information allocated to the authenticable first entity to the distributed database, in particular to a distributed transaction database, wherein the distributed transaction database includes database participants including the authenticable first entity and a marketplace for transferring of cryptographic tokens and/or a second entity.

The term "publishing" can also be referred to as "providing".

The distributed transaction database or distributed transaction database system is formed as a distributed ledger technology, in particular as a blockchain such as Bitcoin or Ethereum, that consists of growing list of records, called blocks, that are securely linked together using cryptography. For example, the distributed database can comprise further database participants such as a third entity, a fourth entity and/or a fifth entity. Moreover, the distributed database can include ten, 12, 25, 50, 75, 100, 250, 500, 1000 or more entities.

In particular, a marketplace is a distributed ledger-based marketplace which enables crypto payments and trading with cryptographic tokens and/or other crypto assets such as bitcoins. Preferably, the marketplace is a token-marketplace such as a NFT-marketplace.

According to a further embodiment, the publishing of the cryptographically secured verifying information according to step b) is performed in form of a website or a web-service of the authenticable first entity, in form of a document or a data file digitally signed by the authenticable first entity, in form of a domain name system entry of the authenticable first entity and/or in form of an extension field of an authentication certificate of the authenticable first entity.

Specifically, the website includes a webserver which is authenticated by a digital certificate of the authenticable first entity. For example, the web-service is also authenticated by a digital certificate of the authenticable first entity and includes a call via an application programming interface, in particular via a restful application programming interface (REST-API). The document includes an extensible markup language (XML) document digitally signed by the authenticable first entity and/or a JavaScript object notation (JSON) document digitally signed by the authenticable first entity. Further, the domain name system entry includes a universal resource identifier (URI), in particular a universal resource locator (URL) of the cryptographically secured verifying information. Here, the cryptographically secured verifying information can be retrieved from the URL. In particular, the cryptographically secured verifying information or a reference to it (for example, URL, URI, hash value) can be included in the extension field of an authentication certificate (e.g. according to standard X.509) allocated to the authenticable first entity.

Preferably, the distributed database and/or the database participants, in particular the second entity, the third entity, the fourth entity and/or the marketplace may have access to the website or the web-service of the authenticable first entity, the document or the data file, the domain name system entry of the authenticable first entity and/or the extension field of the authentication certificate of the authenticable first entity in order to perform step c) of the above-mentioned computer-implemented method according to the first aspect.

According to a further embodiment, the published cryptographically secured verifying information is formed as an enumeration list of issued cryptographic tokens authenticated by the authenticable first entity, as a value enumeration or a value range of at least the first token attribute of issued cryptographic tokens authenticated by the authenticable first entity, as a regular expression, as a Bloom filter and/or as an executable data or script for determining whether a cryptographic token is actually issued by the authenticable first entity.

The enumeration list includes tuples of contract-IDs and token-IDs of cryptographic tokens which are authorized issued by the authenticable first entity. Further, the enumeration list may include the unique contract-ID associated with the authenticable first entity. Furthermore, the enumeration list may have other contract-IDs that the authenticable first entity deems admissible. The terms "authorized issued" mean in particular that by means of steps c) and d) of the computer-implemented method according to the first aspect, it has been determined that these cryptographic tokens have actually been issued by the authenticable first entity.

In particular, the value enumeration includes values of the token-IDs which were issued by or are issued by the authenticable first entity. Further, the value range can be a range, within which admissible values of the token-IDs and/or contract-IDs which are issued by the authenticable first entity are present. For example, all cryptographic tokens can be used which include token-IDs which are in the range from value 123300 to value 123500 and which have the unique contract-ID of the authenticable first entity.

Preferably, the regular expression is a search pattern with the aim to find, within multiple cryptographic tokens, that cryptographic tokens which have, for example, the first token attribute including the unique contract-ID and a specific token-ID. Only that cryptographic tokens which have the first token attribute including the unique contract-ID and the specific token-ID are then used in the further procedure.

For example, the Bloom filter is a space-efficient probabilistic data structure that is used to test whether an element is a member of a set, for example if a cryptographic token is part of a set including cryptographic token which are issued by the authenticable first entity.

Specifically, the executable data or executable script can be executed to determine information (true and false) about a cryptographic token issued as input parameter whether the cryptographic token actually originates from this issuer, for example, the authenticable first entity.

According to a further embodiment, the published cryptographically secured verifying information is further formed as a manufacturer information, in particular at least as a key word, allocated to the authenticable first entity, and/or as a negative list including a listing of at least the first token attribute of cryptographic tokens which are not issued by the authenticable first entity but inadmissibly reference to the authenticable first entity and/or to the manufacturer information of the authenticable first entity.

In particular, if the authenticable first entity is a manufacturer or publisher of technical goods, such as technical machines or software, there is manufacturer information allocated to the authenticable first entity. This manufacturer information can be formed as a key word, for example, as a trademark allocated to the authenticable first entity. In addition, the cryptographically secured verifying information may further include product identifiers as manufacturer information, e.g. information on trademarks of the company which are used in business transactions by this company.

The cryptographically secured verifying information formed as the manufacturer information and the negative list has the advantage that it can be examined which trademarks or comparable product identifiers are used by the issuer or the authenticable first entity in business. This makes it possible to check to which protected identifiers used in business transactions the cryptographic token may legitimately establish a reference.

According to a further embodiment, at least the steps c) and d) are performed by the second entity, in particular using a crypto wallet of the second entity, and/or by the marketplace.

This embodiment has the advantage that a uniform verification of the origin of a cryptographic token can be easily implemented on different wallet realizations and on different token marketplaces. Thus, a crypto wallet of a user of the distributed database, for example the second entity and/or a token marketplace, can simply use the published cryptographically secured verifying information to check which of the issued cryptographic tokens match with the cryptographically secured verifying information of the issuer such as the authenticable first entity. This has the advantage that the user can be protected from purchasing improperly issued or counterfeited cryptographic tokens. Further, the token-marketplace can be prevented to trade with improperly issued or counterfeited cryptographic tokens.

Preferably, at least the method steps c) and d) can also be performed by any other entity of the distributed database which wants to verify the origin of the cryptographic token, with which the any other entity performs a transaction with the cryptographic token. In particular, any other entity includes the second, the third, the fourth and/or the fifth entity.

For example, also the further authenticable first entity can issue a further cryptographic token and can publish a further cryptographically secured verifying information.

Specifically, a crypto wallet is a digital wallet to manage, in particular to send, receive and/or spend, different coins of cryptocurrencies like Bitcoin and Ether and/or cryptographic tokens. Preferably, the crypto wallet is a NFT-wallet. In particular, the crypto wallet is a physical medium, implemented in hardware (device) and/or software (program, service), used by cryptocurrency owners to store public and/or private keys. A crypto wallet is used to track ownership and to receive and spend cryptographic tokens and cryptocurrencies.

A further advantage by using the crypto wallet and/or the marketplace for performing the method steps c) and d) of the above-described computer-implemented method according to the first aspect is that the crypto wallet and/or the marketplace may indicate to a user, after the determining and verifying according to method steps c) and d), whether a certain cryptographic token has been successfully verified against a particular publisher, i.e. against the verifying information published cryptographically secured by the particular publisher, for example, the authenticable first entity.

A further advantage by using the crypto wallet and/or the marketplace for performing the method steps c) and d) is that the crypto wallet and/or the marketplace only allows a transaction to be conducted with a cryptographic token that references an issuer such as the authenticable first entity, if it is a cryptographic token actually issued by the issuer according to the cryptographically secured verifying information of that issuer.

A further advantage is that the crypto wallet and/or the marketplace may form, as part of a transaction or associated with a transaction, information indicating that a token verification according to method steps c) and d) allocated to a certain cryptographic token has occurred. This indicates whether the certain cryptographic token, to which the transaction relates, has been subjected to a token verification, indicates the result of the token verification and/or indicates against which cryptographically secured verifying information the token verification has been made.

According to a further embodiment, the method steps c) and d) are performed at least at a time point when a transaction in the distributed transaction database with the cryptographic token is performed, wherein a transaction includes a publishing and/or a transferring, such as a purchasing and/or a buying, of the cryptographic token within the distributed transaction database triggered by at least one database participant.

This embodiment has the advantage that at the time point when the transaction of the cryptographic token is performed, it can be determined by the method steps c) and d), whether this cryptographic token corresponds to the cryptographically secured verifying information of a particular issuer, for example the authenticable first entity, to which the cryptographic token is assignable or associated at that time.

Preferably, the at least one database participant is a user or an entity which wants to perform the transaction with the cryptographic token in the distributed transaction database. In particular, the at least one database participant triggers the performing of the steps c) and d) of the above-described computer-implemented method when performing the transaction with the cryptographic token.

For example, the distributed database, in particular at least one of the database participants, is the receiver of the cryptographic token and the cryptographically secured verifying information according to steps c) and d) of the above-described computer-implemented method.

Further, the publishing can include an issuing and publishing of the cryptographic token to the distributed database, in particular to the marketplace, by the authenticable first entity, the purchasing can include a purchasing of the cryptographic token to the marketplace, to the second entity and/or to further database participants by the authenticable first entity, the buying can include a buying of the cryptographic token by the second entity, the marketplace and/or by further database participants. Further, the transaction includes a selling of the cryptographic token by the authenticable first entity or the second entity to the marketplace and/or further database participants such that a change of ownership occurs.

A transaction can also include an issuing, obtaining (receiving), forwarding and/or destroying of a cryptographic token by the first entity, the second entity and/or any other entity of the distributed database or a distributed database system.

Any embodiment of the first aspect may be combined with any embodiment of the first aspect to obtain another embodiment of the first aspect.

According to a second aspect, a computer program product is proposed which comprises a program code for executing the above-described computer-implemented method according to the first aspect or an embodiment of the first aspect when run on at least one computer.

A computer program product, such as a computer program means, may be embodied as a memory card, USB stick, CD-ROM, DVD or as a file which may be downloaded from a server in a network. For example, such a file may be provided by transferring the file comprising the computer program product from a wireless communication network.

According to a third aspect, a distributed database system, in particular a distributed transaction database system, for verification of an origin of a cryptographic token is proposed. The system comprising:
an authenticable first entity for issuing a cryptographic token including a first token attribute and for publishing cryptographically secured verifying information including a second token,
a distributed database including a receiver unit for receiving the issued cryptographic token and for receiving the published cryptographically secured verifying information, and
a verification unit for determining whether the cryptographically secured verifying information is actually published by the authenticable first entity by an examination of authentication information allocated to the authenticable first entity for obtaining an authentication result and for verifying, if the authentication result is positive, whether the cryptographic token is actually issued by the authenticable first entity by a comparison of at least the first token attribute of the cryptographic token and the second token attribute of the cryptographically secured verifying information for obtaining a verification result for the cryptographic token, wherein the verification unit is included in the distributed database and/or in a second entity included in the distributed database system.

In addition, the verification unit can further be implemented in any other entity of the distributed database system which wants to perform a transaction with the cryptographic token and thus has to verify whether the cryptographic token and the cryptographically secured verifying information are actually issued and published by the authenticable first entity.

The respective unit, e.g. the verification unit or the receiver unit, may be implemented in hardware and/or in software. If said unit is implemented in hardware, it may be embodied as a device, e.g. as a computer or as a processor or as a part of a system, e.g. a computer system. If said unit is implemented in software it may be embodied as a computer program product, as a function, as a routine, as a program code or as an executable object.

The technical effects and advantages described for the computer-implemented method according to the first aspect apply equally to the distributed database system according to the third aspect.

Further, embodiments and features described with reference to the computer-implemented method according to the first aspect apply mutatis mutandis to the distributed database system according to the third aspect.

According to an embodiment of the distributed database system, the verification result is positive if the comparison results in that the first token attribute corresponds to the second token attribute, wherein when the verification result is positive, the distributed database is configured to include the cryptographically secured verifying information or a reference to the cryptographically secured verifying information and the corresponding cryptographic token as positive information into the distributed database.

This embodiment has the advantage that it possible to prove, by the positive verification result, that at the time of the transaction, the cryptographic token issued by an issuer was a cryptographic token originating from that issuer such as the authenticable first entity. Even if it should nevertheless be a case of an inadmissibly issued cryptographic token, it may thereby be possible to prove that the actors involved in the transaction acted in good faith, i.e. that they plausibly considered the cryptographic token concerned to be an original cryptographic token of that issuer.

Preferably, the cryptographically secured verifying information as the positive information, in particular an enumeration list of issued cryptographic tokens authenticated by the authenticable first entity, proves that the involved cryptographic token actually corresponds to the cryptographically secured verifying information actually published by the authenticable first entity.

The reference can be formed in form of an URL of the cryptographically secured verifying information, an URI of the cryptographically secured verifying information or in form of a hash value of the cryptographically secured verifying information.

Further possible implementations or alternative solutions of the invention also encompass combinations - that are not explicitly mentioned herein - of features described above or below with regard to the embodiments. The person skilled in the art may also add individual or isolated aspects and features to the most basic form of the invention.

Further embodiments, features and advantages of the present invention will become apparent from the subsequent description and dependent claims, taken in conjunction with the accompanying drawings, in which:
- Fig. 1: shows a distributed database system for verification of an origin of a cryptographic token; and
- Fig. 2: shows a computer-implemented method for verifying an origin of a cryptographic token of the distributed database system according to Fig. 1.

In the Figures, like reference numerals designate like or functionally equivalent elements, unless otherwise indicated.

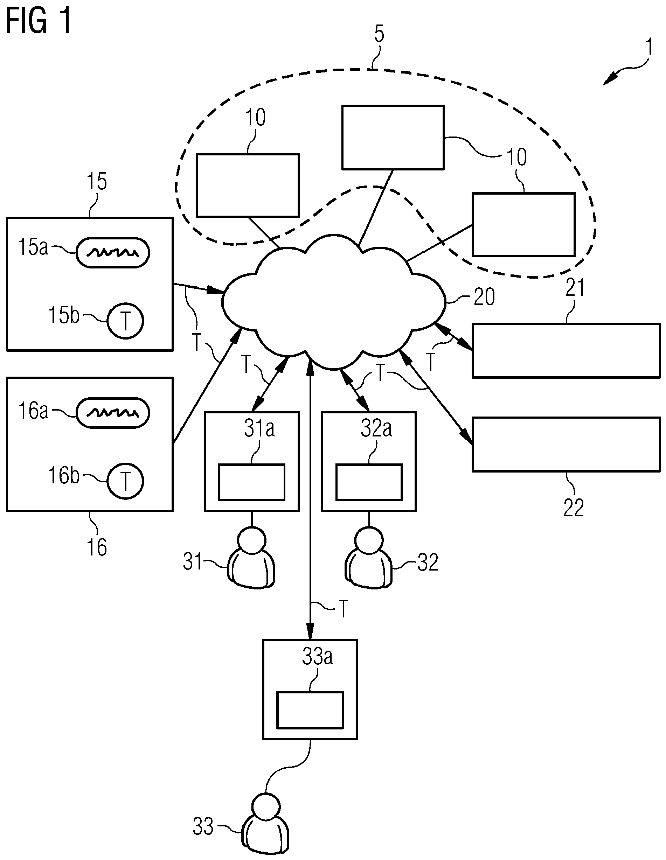

Fig. 1 shows a distributed database system 1, in particular a distributed transaction database system, for verification of an origin of a cryptographic token 15b. In Fig. 1, the cryptographic token 15b is formed as a non-fungible token (NFT). In other embodiments, the cryptographic token 15b is formed as a fungible token. The distributed database system 1 of Fig. 1 includes a distributed database 5 which is formed as multiple, in this case three, distributed ledger nodes 10.

The distributed database 5 allows cryptographic tokens to be issued (minted), passed on and destroyed. For this purpose, smart contracts are stored in the distributed database 5, which control the issuance, the distribution and the destruction of a fungible or a non-fungible cryptographic token that is managed in the distributed database 5.

The distributed database system 1 of Fig. 1 further includes an authenticable first entity 15, a further authenticable first entity 16, a second entity 31, a third entity 32 and a fourth entity 33 as well as a first marketplace 21 and a second marketplace 22. All above-described components of the distributed database system 1 of Fig. 1 are directly or indirectly connected via the internet 20 to the distributed database 5.

The second entity 31, the third entity 32 and the fourth entity 33 each respectively including a crypto wallet. The second entity 31 includes a first crypto wallet 31a, the third entity 32 includes a second crypto wallet 32a and the fourth entity 33 includes a third crypto wallet 33a. The second, third and fourth entities 31, 32, 33 can use their respective crypto wallets to obtain or pass on cryptographic tokens or destroy them. A respective crypto wallet 31a, 32a, 33a can be implemented on an entity's device, or a user or an entity can use a crypto wallet provided by a cloud service connected with the internet 20. A crypto wallet 31a, 32a, 33a can interact directly with the distributed database 5 by creating transactions and transmitting them to the distributed database 5 for confirmation.

The first and second marketplaces 21, 22 allow for transferring of the cryptographic token 15b from the first and second marketplaces 21, 22 to the distributed database 5 and/or to one or multiple entities, such as the second, the third and the fourth entity 31, 32, 33.

The further authenticable first entity 16 can generate and issue a further cryptographic token 16b such as a NFT. In particular, the other entities, such as the second, the third and the fourth entity 31, 32, 33 can also generate and publish cryptographic tokens but the origin of these cryptographic tokens cannot be verified since the second, the third and the fourth entities 31, 32, 33 are respectively no authenticable entities. These entities 31, 32, 33 are no authenticable entities since they have no authentication certificate issued by a certificate authority.

The providing of cryptographic tokens via the internet 20, in particular via a peer-to-peer-network between the database participants, to the distributed database 5 can be performed by smart contracts which are embedded in at least a distributed ledger node 10 of the distributed database 5. The internet 20 can include a cloud.

The distributed database system 1 is configured to verify an origin of a cryptographic token 15b. In the following, the explanations apply for the cryptographic token 15b. But they can apply equally to the further cryptographic token 16b, further cryptographically secured verifying information 16a and the further authenticable first entity 16.

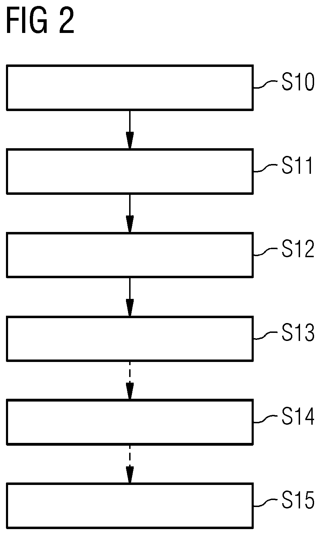

Hereafter, based on Figs. 1 and 2, it is explained how the origin of the cryptographic token 15b is verified. In addition, references to the method steps S10 to S15 of Fig. 2, which shows a computer-implemented method for verifying an origin of a cryptographic token 15b of the distributed database system 1 according to Fig. 1 in a schematic block diagram, are indicated in parentheses in the following explanations of Fig. 1.

First, the authenticable first entity 15 is configured to issue the cryptographic token 15b including a first token attribute to the distributed database 5 via the internet 20 and is configured to publish cryptographically secured verifying information 15a including a second token attribute via the internet 20. The above issuing and publishing can be formed as a transaction T which is shown in Fig. 1 as a connection with an arrow at one end extending from the authenticable first entity 15 to the internet 20. In addition, the verifying information is cryptographically secured by applying a digital signature of the authenticable first entity 15, in particular by using a private key of the authenticable first entity 15, to the verifying information.

In Fig. 1, the above-described publishing of the cryptographically secured verifying information 15a is performed in form of a website or a web-service of the authenticable first entity 15 or in form of a document or a data file digitally signed by the authenticable first entity 15. In embodiments, the publishing of the cryptographically secured verifying information 15a can be performed in form of a domain name system entry of the authenticable first entity 15 or in form of an extension field of an authentication certificate of the authenticable first entity 15.

Further, the published cryptographically secured verifying information 15a can be formed in different ways. In Fig. 1, the published cryptographically secured verifying information 15a is formed as an enumeration list of issued cryptographic tokens 15b authenticated by the authenticable first entity 15, as a value enumeration or a value range of at least the first token attribute of issued cryptographic tokens 15b authenticated by the authenticable first entity 15.

In embodiments not shown, the published cryptographically secured verifying information 15a can be formed as a regular expression, as a Bloom filter or as an executable data or script for determining whether a cryptographic token 15b is actually issued by the authenticable first entity 15.

In addition, the published cryptographically secured verifying information 15a can be further formed as a manufacturer information, in particular at least as a key word, allocated to the authenticable first entity 15. Also, the published cryptographically secured verifying information 15a can be formed as a negative list including a listing of the first token attribute of cryptographic tokens which are not issued by the authenticable first entity 15 but inadmissibly reference to the authenticable first entity 15 and/or to the manufacturer information of the authenticable first entity 15.

The first token attribute (not shown) includes a contract identifier being unique for the authenticable first entity 15 and a token identifier of the cryptographic token 15b.

Further, the distributed database 5 includes a receiver unit (not shown). After the issuing of the cryptographic token 15b and the publishing of the cryptographically secured verifying information 15a, the receiver unit is configured to receive the issued cryptographic token 15b and the published cryptographically secured verifying information 15a (see method steps S10 and S11 of Fig. 2). From the point of view of the distributed database 5, the cryptographic token 15b as well as the cryptographically secured verifying information 15a are respectively allocated to the authenticable first entity 15 when they are received.

Next, a verification unit (not shown) which is included in the distributed database 5 of Fig. 1, in particular in one or more of the distributed ledger nodes 10, is explained. In embodiments, the verification unit is included in one or each of the second, third and fourth entities 31, 32, 33.

The verification unit is configured to determine whether the cryptographically secured verifying information 15a is actually published by the authenticable first entity 15 by an examination of authentication information allocated to the authenticable first entity 15 for obtaining an authentication result (see method step S12 of Fig. 2). For example, the first token attribute is the contract-ID of the cryptographic token 15b and it has an exemplary hash value of 0cx3456. Thus, the cryptographic token 15b has the hash value of 0cx3456 as contract-ID since the authenticable first entity 15 which claims to be the issuer of the cryptographic token 15b, has the hash value of 0cx3456 as the contract-ID unique for the authenticable first entity 15.

In Fig. 1, the authentication information includes a digital certificate allocated to the authenticable first entity 15 and issued by a certificate authority. In embodiments not shown, the authentication information includes a registry number of the authenticable first entity 15, in particular a company registration number, a domain name system of the authenticable first entity 15 and/or a legal entity certificate of the authenticable first entity 15.

After that, the verification unit is configured to verify, if the above-mentioned authentication result is positive, whether the cryptographic token 15b is actually issued by the authenticable first entity 15 by a comparison of the first token attribute of the cryptographic token 15b and the second token attribute of the cryptographically secured verifying information 15a for obtaining a verification result for the cryptographic token 15b (see method step S13 of Fig. 2).

The method steps S12 and S13 (see Fig. 2) can also be performed by the second, third and/or fourth entity 31, 32, 33 using their respective crypto wallets 31a, 32a, 33a. In addition, the method steps S12 and S13 can also be performed by the first marketplace 21 or the second marketplace 22.

Further, there is at least a time point, when the verification unit is configured to perform the determining and the verifying according to method steps S12 and S13, namely at a time point, when a transaction T in the distributed database 5 with the cryptographic token 15b is performed.

In Fig. 1, a transaction T includes a publishing and/or a transferring, such as a purchasing and/or a buying, of the cryptographic token 15b within the distributed database 5 triggered by at least one database participant. In Fig. 1, multiple transactions T, respectively formed as a connection line with an arrow at one end, between the database participants and the internet 20 and the distributed database 5 are shown. A transaction T from the authenticable first entity 15 to the distributed database 5 in form of publishing the cryptographic token 15b via the internet 20 to the distributed database 5 is shown in Fig. 1. Further, a transaction T from the further authenticable first entity 16 to the distributed database 5 in form of publishing the further cryptographic token 16b via the internet 20 to the distributed database 5 is shown in Fig. 1. Moreover, Fig. 1 shows respective transactions T between the internet 20 and the second, third and fourth entities 31, 32, 33 via their respective crypto wallets 31a, 32a, 33a in form of transferring the cryptographic token 15b between the distributed database 5 via the internet 20 and the respective crypto wallets 31a, 32a, 33a. Furthermore, Fig. 1 shows respective transactions T between the internet 20 and the first and second marketplaces 21, 22 in form of transferring the cryptographic token 15b between the distributed database 5 via the internet 20 and the respective first and second marketplaces 21, 22. Further, as shown in Fig. 1, each distributed ledger node 5 is directly connected via a respective connection to the internet 20.

Moreover, the above-described verification result is positive if the comparing results in that the first token attribute corresponds to the second token attribute. Then, the received cryptographic token 15b is an original cryptographic token actually issued by the authenticable first entity 15. Further, when the verification result is positive, the distributed database 5 is configured to include the cryptographically secured verifying information 15a or a reference to the cryptographically secured verifying information 15a and the corresponding cryptographic token 15b as positive information into the distributed database 5. Moreover, if the verification result is positive, a second action can be performed by the distributed database 5 or the respective entity which has triggered the verification. The second action includes displaying of information indicating that the received cryptographic token 15b is actually issued by the authenticable first entity 15 and/or allowing a token transaction request referencing the cryptographic token 15b (see method step S14 of Fig. 2).

In addition, the verification result is negative if the comparing results in that the first token attribute is different to the second token attribute. In this case, the received cryptographic token 15b is determined to be a counterfeited cryptographic token. Further, if the verification result is negative, a first action can be performed by the distributed database 5 or the respective entity which has triggered the verification. The first action includes displaying a warning message indicating that the received cryptographic token 15b is counterfeited, blocking of an access to the counterfeited cryptographic token, blocking of an access to a crypto wallet function and/or blocking a token transaction (see also method step S14 of Fig. 2).

Moreover, if a further cryptographic token 16b issued by another entity such as the further authenticable first entity 16 different to the authenticable first entity 15, includes a reference to the authenticable first entity 15, a further warning message can be displayed by the distributed database 5 or the respective entity which has triggered the transaction T (see method step S15 of Fig. 2). The reference includes an identifier specific for the authenticable first entity 15 or a further identifier which is similar to the identifier and with which a likelihood of confusion arises between the identifier and the further identifier.

Fig. 2 shows a block diagram illustrating the steps of a computer-implemented method for verifying an origin of a cryptographic token 15b (see Fig. 1) of the distributed database system 1 (see Fig. 1) according to Fig. 1. The respective method steps S10 - S13 have already been explained above in terms of Fig. 1, which is why, in order to avoid repetitions, the method steps S10 - S13 are not explained again. This also applies to the method steps S14 and S15 which are embodiments of the method steps S10 - S13 and are thus connected to the method steps S10 - S13 in Fig. 2 via dashed lines each including at one end an arrow.

Although the present invention has been described in accordance with preferred embodiments, it is obvious for the person skilled in the art that modifications are possible in all embodiments.

### Reference Numerals

- 1: distributed database system
- 5: distributed database
- 10: distributed ledger node
- 15: authenticable first entity
- 15a: cryptographically secured verifying information
- 15b: cryptographic token
- 16: further authenticable first entity
- 16a: further cryptographically secured verifying information
- 16b: further cryptographic token
- 20: internet
- 21: first marketplace
- 22: second marketplace
- 31: second entity
- 31a: first crypto wallet
- 32: third entity
- 32a: second crypto wallet
- 33: fourth entity
- 33a: third crypto wallet

- S10: method step
- S11: method step
- S12: method step
- S13: method step
- S14: method step
- S15: method step
- T: transaction

### References

[1] https://boredapeyachtclub.com/#/home
[2] https://support.opensea.io/hc/en-us/articles/360063519133-How-do-I-get-a-blue-checkmark-
[3] https://ens.domains/de/

## Claims

1. Computer-implemented method for verifying an origin of a cryptographic token (15b) of a distributed database (5), the method comprising:
a) receiving (S10) a cryptographic token (15b) including a first token attribute, wherein said cryptographic token (15b) being associated with an authenticable first entity (15),
b) receiving (S11) cryptographically secured verifying information (15a), wherein said cryptographically secured verifying information (15a) being allocated to the authenticable first entity (15) and including a second token attribute,
c) determining (S12) whether the cryptographically secured verifying information (15a) is actually published by the authenticable first entity (15) by examining authentication information allocated to the authenticable first entity (15) for obtaining an authentication result, and
d) if the authentication result is positive, verifying (S13) whether the cryptographic token (15b) is actually issued by the authenticable first entity (15) by comparing at least the first token attribute of the cryptographic token (15b) and the second token attribute of the cryptographically secured verifying information (15a) for obtaining a verification result for the cryptographic token (15b).

2. Method according to claim 1,
**characterized in**
**that** the verification result is positive if the comparing results in that the first token attribute corresponds to the second token attribute, wherein the verification result is negative if the comparing results in that the first token attribute is different to the second token attribute.

3. Method according to claim 2,
**characterized in**
**that** the received cryptographic token (15b) is an original cryptographic token actually issued by the authenticable first entity (15) if the verification result is positive and the received cryptographic token (15b) is a counterfeited cryptographic token if the verification result is negative.

4. Method according to claim 2 or 3,
**characterized by** a step e) (S14) which includes:
e1) performing a first action if the verification result is negative, wherein the first action includes displaying a warning message indicating that the received cryptographic token (15b) is counterfeited, blocking of an access to the counterfeited cryptographic token, blocking of an access to a crypto wallet function and/or blocking a token transaction, and/or
e2) performing a second action if the verification result is positive, wherein the second action includes displaying of information indicating that the received cryptographic token (15b) is actually issued by the authenticable first entity (15) and/or allowing a token transaction request referencing the cryptographic token (15b).

5. Method according to one of claims 1 - 4,
**characterized by**:
f) displaying (S15) a further warning message, if a further cryptographic token (16b) issued by another entity different to the authenticable first entity (15), includes a reference to the authenticable first entity (15), wherein the reference includes an identifier specific for the authenticable first entity (15) and/or a further identifier which is similar to the identifier and with which a likelihood of confusion arises between the identifier and the further identifier.

6. Method according to one of claims 1 - 5,
**characterized in**
**that** at least the cryptographic token (15b) received in step a) is formed as a non-fungible cryptographic token.

7. Method according to one of claims 1 - 6,
**characterized in**
**that** the first token attribute includes a contract identifier being unique for the authenticable first entity (15) and/or a token identifier of the cryptographic token (15b).

8. Method according to one of claims 1 - 7,
**characterized in**
**that** the authentication information includes a digital certificate allocated to the authenticable first entity (15) and issued by a certificate authority, a registry number of the authenticable first entity (15), in particular a company registration number, a domain name system of the authenticable first entity (15) and/or a legal entity certificate of the authenticable first entity (15), wherein by applying a digital signature of the authenticable first entity (15), in particular a private key, to the verifying information, the verifying information is cryptographically secured.

9. Method according to one of claims 1 - 8,
**characterized in**
**that** step b) (S11) includes, prior to the receiving, the step:
publishing the cryptographically secured verifying information (15a) allocated to the authenticable first entity (15) to the distributed database (5), in particular to a distributed transaction database (5), wherein the distributed transaction database (5) includes database participants including the authenticable first entity (15) and a marketplace for transferring of cryptographic tokens (15b, 16b) and/or a second entity (31).

10. Method according to claim 9,
**characterized in**
**that** the publishing of the cryptographically secured verifying information (15a) according to step b) (S11) is performed in form of a website or a web-service of the authenticable first entity (15), in form of a document or a data file digitally signed by the authenticable first entity (15), in form of a domain name system entry of the authenticable first entity (15) and/or in form of an extension field of an authentication certificate of the authenticable first entity (15).

11. Method according to claim 9 or 10,
**characterized in**
**that** the published cryptographically secured verifying information (15a) is formed as an enumeration list of issued cryptographic tokens (15b) authenticated by the authenticable first entity (15), as a value enumeration or a value range of at least the first token attribute of issued cryptographic tokens (15b) authenticated by the authenticable first entity (15), as a regular expression, as a Bloom filter and/or as an executable data or script for determining whether a cryptographic token (15b, 16b) is actually issued by the authenticable first entity (15).

12. Method according to claim 11,
**characterized in**
**that** the published cryptographically secured verifying information (15a) is further formed as a manufacturer information, in particular at least as a key word, allocated to the authenticable first entity (15), and/or as a negative list including a listing of at least the first token attribute of cryptographic tokens (16b) which are not issued by the authenticable first entity (15) but inadmissibly reference to the authenticable first entity (15) and/or to the manufacturer information of the authenticable first entity (15).

13. Method according to one of claims 9 - 12,
**characterized in**
**that** at least the steps c) (S12) and d) (S13) are performed by the second entity (31), in particular using a crypto wallet (31a) of the second entity (31), and/or by the marketplace.

14. Method according to one of claims 9 - 13,
**characterized in**
**that** the steps c) (S12) and d) (S13) are performed at least at a time point when a transaction (T) in the distributed transaction database (5) with the cryptographic token (15b) is performed, wherein a transaction (T) includes a publishing and/or a transferring, such as a purchasing and/or a buying, of the cryptographic token (15a) within the distributed transaction database (5) triggered by at least one database participant.

15. A computer program product comprising a program code for executing the computer-implemented method according to one of claims 1 - 14 when run on at least one computer.

16. Distributed database system (1), in particular distributed transaction database system, for verification of an origin of a cryptographic token (15b), the system (1) comprising:
an authenticable first entity (15) for issuing a cryptographic token (15b) including a first token attribute and for publishing cryptographically secured verifying information (15a) including a second token attribute,
a distributed database (5) including a receiver unit for receiving the issued cryptographic token (15b) and for receiving the published cryptographically secured verifying information (15a), and
a verification unit for determining whether the cryptographically secured verifying information (15a) is actually published by the authenticable first entity (15) by an examination of authentication information allocated to the authenticable first entity (15) for obtaining an authentication result and for verifying, if the authentication result is positive, whether the cryptographic token (15b) is actually issued by the authenticable first entity (15) by a comparison of at least the first token attribute of the cryptographic token (15b) and the second token attribute of the cryptographically secured verifying information (15a) for obtaining a verification result for the cryptographic token (15b), wherein the verification unit is included in the distributed database (5) and/or in a second entity (31) included in the distributed database system (1).

17. System according to claim 16,
**characterized in**
**that** the verification result is positive if the comparison results in that the first token attribute corresponds to the second token attribute, wherein when the verification result is positive, the distributed database (5) is configured to include the cryptographically secured verifying information (15a) or a reference to the cryptographically secured verifying information (15a) and the corresponding cryptographic token (15b) as positive information into the distributed database (5).
